# FASCICULE DE BREVET EUROPEEN

(11) **EP 2 438 706 B1**
(45) Date de publication et mention de la délivrance du brevet: **12.03.2014**
(21) Numéro de dépôt: 10724384.2
(22) Date de dépôt: 28.05.2010
(51) Int. Cl.: H04L 9/32, H04N 7/18

(54) **PROCEDE PERMETTANT DE DEMATERIALISER EN TOUTE SECURITE LE TRANSFERT DE LA PREUVE DANS DES SYSTEMES DE PRODUCTION DE FLUX DE DONNEES, EN PARTICULIER DE VIDEOSURVEILLANCE**
VERFAHREN ZUR SICHEREN DEMATERIALISIERUNG DES TRANSFERS DER PROBE IN SYSTEMEN ZUR PRODUKTION VON DATENFLÜSSEN, INSBESONDERE VIDEOÜBERWACHUNG
METHOD ALLOWING TO SECURELY DEMATERIALISE AND TRANSFER THE PROOF IN DATASTREAM PRODUCTION SYSTEMS, IN PARTICULAR FOR VIDEOSURVEILLANCE

(30) Priorité: 05.06.2009 FR 0902731
(43) Date de publication de la demande: 11.04.2012
(73) Titulaire: THALES, 92200 Neuilly-sur-Seine (FR)
(72) Inventeur: LE CAM, Michel, F-91460 Marcoussis (FR); SEMSOUM, Youcef, F-94300 Vincennes (FR); SULZER, Jean-François, F-92310 Sevres (FR)
(74) Mandataire: Lucas, Laurent Jacques
(86) Numéro de dépôt international: PCT/EP2010/057402
(87) Numéro de publication internationale: WO 2010/139619

(56) Documents cités:
- FR-A1- 2 884 678
- US-A1- 2004 085 446
- US-A1- 2006 075 235
- US-A1- 2008 031 448

## Description

La présente invention se rapporte à un procédé permettant de dématérialiser en toute sécurité le transfert de la preuve dans les systèmes de production de flux de données, en particulier de vidéosurveillance, ainsi qu'à un système de mise en oeuvre d'un tel procédé. Plus généralement, l'invention s'applique à toute chaine de production par des capteurs de flux de données numériques rapides, telle qu'un système audio, un ensemble de numérisation de documents ou un processus industriel.

Avec l'amélioration de sa qualité et avec la multiplication des caméras installées, la vidéosurveillance est de plus en plus souvent utilisée comme élément de preuve par la justice. En conséquence, elle doit être incontestable. Plus généralement, les bonnes pratiques de protection de la vie privée du citoyen et la sensibilité de certaines scènes observées conduisent à limiter l'accès aux données de vidéosurveillance aux seules personnes habilitées. Dans ces conditions, les autorités sont conduites à édicter des règles strictes de contrôle d'accès aux systèmes de vidéosurveillance et à préconiser, souvent en termes vagues, la mise en oeuvre de procédures techniques adaptées.

Typiquement, la procédure dans de nombreux pays prévoit que pour recueillir une preuve destinée à la justice, un officier de police judiciaire doit se déplacer jusqu'au serveur de stockage (lui-même construit selon les meilleures pratiques en matière de sécurité) pour recueillir l'élément de preuve en recopiant personnellement sur un support physique non réinscriptible les séquences voulues.

La généralisation récente des architectures IP (utilisation des protocoles internet) jusqu'à la prise de vues et des moyens de transmission mutualisés (hertziens ou filaires) accroît encore les menaces d'intrusion dans la chaîne de transmission et plus généralement de manoeuvre frauduleuses de nature à altérer les données.

La réponse que donnent aujourd'hui les opérateurs chargés de définir les systèmes et les intégrateurs qui les conçoivent consiste en une tentative de sécurisation physique des chaînes de transmission complètes entre caméras et moyens de stockage et de visualisation. Ceci nécessite des liaisons de données privées d'un coût élevé et souvent une centralisation du stockage qui permet d'éviter le déplacement d'un officier de police judiciaire, et du support technique qui doit l'accompagner, alors qu'un stockage réparti serait la topologie optimale.

Même si cette insécurité juridique est encore peu présente, la contestation par une des parties de l'authenticité de la preuve qui aurait pu être manipulée par substitution de source, élimination d'objets dans l'image, etc... ne manquera pas d'intervenir face à des enjeux importants comme ont pu être mises en cause les informations obtenues lors du dépouillement d'une boîte noire après le crash d'un aéronef.

L'adoption par les systèmes de vidéosurveillance d'infrastructures à réseau est un phénomène récent, et les évolutions techniques sont fréquentes et rapides. Le coût étant souvent un facteur décisif, la sécurité n'apparaît encore en général que comme une option *a minima.*

Les techniques actuellement employées pour améliorer la sécurité se limitent au tatouage ou « watermarking » (ajout d'un filigrane, information supposée invisible, visant à garantir que les données ne sont pas modifiées) lors du cryptage des données (avec des algorithmes d'usage général) lors de l'enregistrement. Toujours au niveau des seuls enregistreurs, la technique de signature numérique a été proposée, mais sans politique de gestion de clés de signature (IGC ou PKI) et sans serveur de preuve.

Lorsque les systèmes de vidéosurveillance comportent des liaisons entre noeuds, ces noeuds disposant eux-mêmes d'une capacité de traitement, les techniques applicables aux communications numériques, telles que la création d'un réseau virtuel privé (connu sous le nom de VPN) sont naturellement applicables, mais ne couvrent de leur protection que les échanges entre les points concernés.

Par ailleurs, dans le domaine des transactions administratives et financières, qui correspondent à des échanges limités de données en une succession de sessions courtes, des techniques de « plate-forme de confiance » se sont développées et sont mises en oeuvre pour le grand public (paiements sécurisés, déclarations d'impôts dématérialisées,...).

Un document US 2004/085446 A1 présente un procédé de transmission sécurisée d'un signal vidéo dans un système de vidéo surveillance.

La présente invention a pour objet un procédé permettant de s'affranchir des contraintes citées ci-dessus sans obérer significativement les coûts, au niveau de tous les éléments d'un système de transmission de flux de données à sécuriser, et en particulier d'un système de vidéosurveillance, depuis la source de ces données jusqu'au lieu d'archivage, et ce de façon totalement dématérialisée, garantissant le contrôle et l'authentification des accès, de même que l'intégrité des contenus.

Le procédé conforme à l'invention est défini par les revendications.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'un exemple simple de mise en oeuvre de l'invention ne comportant que deux caméras,
- la figure 2 est un organigramme d'un exemple de « bulle sécurisée » utilisée par l'invention,
- la figure 3 est un schéma temporel d'une plate-forme d'administration de la preuve de type connu pouvant être utilisée par la présente invention, et
- la figure 4 est un bloc-diagramme d'un exemple de système de mise en oeuvre de la preuve de fiabilité d'une signature pouvant être utilisé par la présente invention.

La présente invention vise à s'affranchir des difficultés, surcoûts et menaces décrits plus haut, en adaptant aux systèmes de vidéosurveillance, qui requièrent à la fois une bande passante élevée et une continuité de flux (streaming), les techniques de sécurisation des réseaux informatiques, en y ajoutant les technologies de plate-forme de confiance numérique utilisées dans les transactions administratives et financières.

Concrètement, l'invention fait appel, en y introduisant les contraintes de la vidéo, à la fois aux cinq fonctions de sécurité suivantes:
A - la mise en place d'un réseau sécurisé de bout en bout pour la, vidéosurveillance, avec en particulier l'utilisation de mécanismes d'authentification au niveau de chaque acteur du réseau sécurisé et le cryptage des données transitant entre les acteurs ;
B - la signature numérique des données enregistrées, quel qu'en soit le type (vidéo, audio, métadonnées et traces) ;
C - le chiffrement des données sensibles enregistrées, dès lors qu'il y a risque de visualisation des informations enregistrées par des tiers non autorisés par un accès physique au média de stockage;
D -la mise en place d'une infrastructure de gestion de clefs (appelée IGC ou PKI), pour la création, le renouvellement, la distribution et la répudiation (par répudiation, on entend ici le rejet immédiat et définitif d'une autorisation si toutes les conditions requises pour sa validité ne sont pas démontrées) des clefs (certificats) ;
E -la mise en place d'un processus d'administration de preuve qui garantit :
   - L'horodatage de la signature numérique ;
   - La validation de cette signature numérique ;
   - L'archivage *in fine* de la preuve légale de l'intégrité et de l'authenticité du flux vidéo.

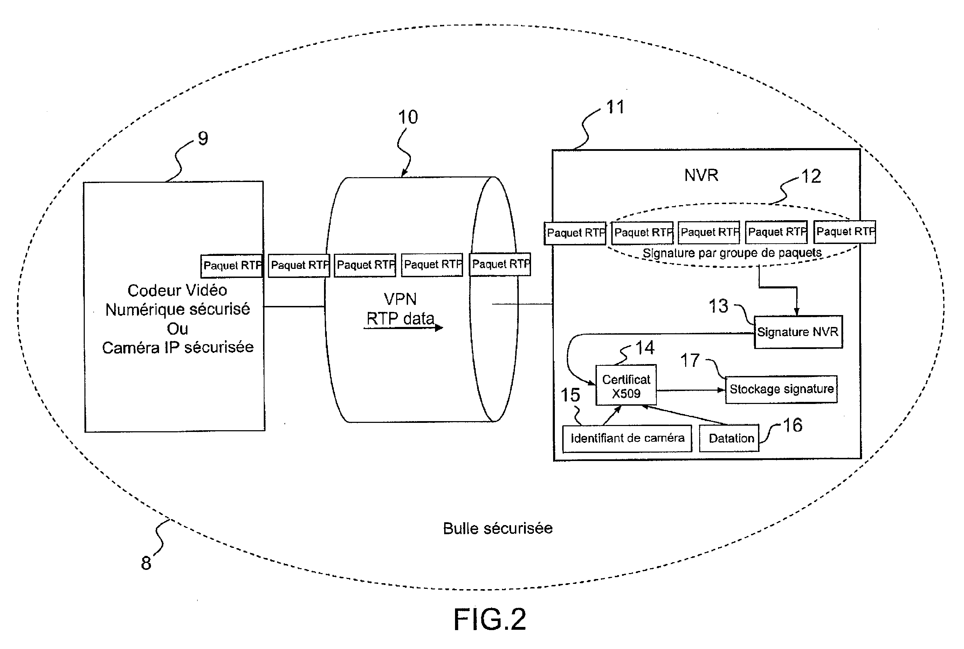

Ainsi, une caractéristique importante de l'invention consiste, plutôt que de sécuriser physiquement et de façon indépendante chaque branche du système, à prévoir dans chaque composant actif de ce système (caméra, noeud de stockage, périphérique,...) une capacité de traitement permettant de l'inclure dans une « bulle de confiance » (ou « bulle sécurisée ») telle que décrite ci-dessous en référence à la figure 2. Dans le cas de caméras, où le capteur pourrait, de façon mal intentionnée, être désolidarisé de l'électronique, cette intégrité est garantie par des artifices de scellement mécanique anti-intrusion.

Entre autres bénéfices, l'invention permet, sans risque de compromission ni modification des fonctionnalités, de s'appuyer sur n'importe quel réseau de télécommunications, y compris hertzien, et d'autre part d'authentifier, comme décrit plus loin, avec valeur de preuve légale, les vidéos recueillies.

Si nécessaire, il est possible d'augmenter ce niveau de sécurité en équipant chaque élément d'un mécanisme d'authentification forte (identification à double facteur), en mettant en place des techniques de limitation d'accès (Pare-feux, Qualité de service) et de détection d'intrusion (IDS).

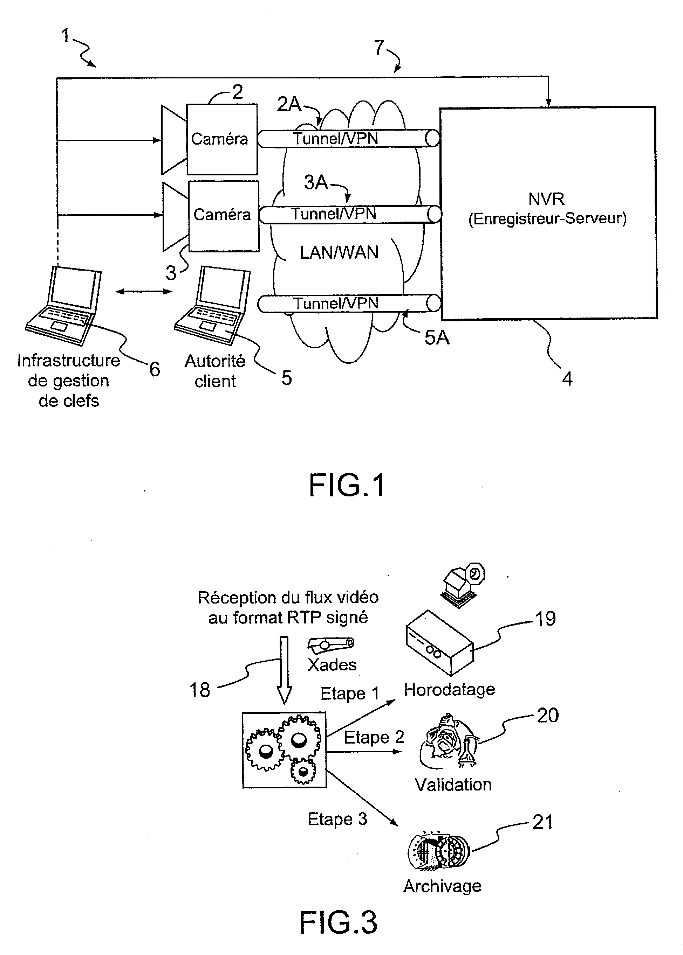

On a schématisé en figure 1 un exemple simple de mise en oeuvre de l'invention. Ce système simplifié 1 ne comporte dans cet exemple que deux caméras 2, 3, un serveur/enregistreur de données 4, appelé NVR (« Network Video Recorder »), une autorité cliente 5 (autorité d'état, police,...).coopérant avec un système 6 de gestion de clefs, et des moyens 7 de communication sécurisée entre le NVR 4 et les éléments 2, 3 et 5.

Cette mise en oeuvre est réalisée, au niveau de chaque caméra, par l'adjonction ou l'implantation (sous forme d'un processeur dédié si le processeur principal en charge de la compression et des fonctions de vidéo intelligente n'a pas les capacités voulues) d'une capacité de traitement complémentaire pour réaliser :
- Les opérations finales (en ce sens qu'elles ne sont réalisées qu'une fois que toutes les opérations sur les contenus sont terminées et qu'ils sont prêts à être transférés) de signature et d'authentification (générateur de nombres aléatoires, cryptage RSA), constituant la Fonction d'Authentification (FA) de l'abonné au réseau qu'est la caméra, de façon à s'assurer qu'il n'y a pas eu de substitution ;
- Une fonction de chiffrement ou Fonction Cryptographique de Traitement de Flux (dite MCTF) permettant de réaliser le cryptage symétrique et le hachage asymétrique des flux de données (vidéo et données auxiliaires) de façon à les protéger dans leur trajet dès la sortie de la caméra, la transmission vers le serveur 4 s'effectuant en constituant un tunnel sécurisé, utilisant par exemple un VPN (« Virtual Private Network » : réseau privé virtuel de communication) de type « open VPN » où le client est la caméra (2, 3 respectivement) et le serveur est le NVR 4;
- La gestion des clefs et certificats (création, renouvellement, effacement), en fonctionnement normal (lorsque la caméra est connectée au système) et en maintenance (lorsque le système est en cours d'installation ou de réinstallation).

La caméra ainsi enrichie de fonctions de sécurité se présente sous forme d'un ensemble mécanique comportant des dispositifs de détection électrique ou autre, assurant une fonction de scellement telle que toute tentative d'intrusion physique se solde par la perte des clefs d'authentification et de cryptage, interdisant quasi instantanément toute transmission de données.

Chaque caméra 2, 3 est reliée au NVR 4, comme indiqué plus haut, via un tunnel sécurisé 2A, 3A respectivement, au travers d'un réseau IP standard en utilisant des protocoles d'échange courants.

Toujours dans cet exemple simple de mise en oeuvre, le NVR est un calculateur de type serveur PC incluant les fonctions habituelles d'enregistrement de données, de serveur de données (flux multimédia, métadonnées) et de serveur / relais de temps. Il diffère toutefois de l'état de l'art par l'adjonction des mêmes fonctions de sécurité que celles de chaque caméra, décrites plus haut (avec les dispositifs physiques également décrits de protection contre les intrusions), complétées de deux fonctions additionnelles de sécurité :
- Le contrôle des accès de chaque client au système en fonction des droits attribués à chaque connexion VPN,
- La première partie du processus d'administration de la preuve consistant à horodater la signature conformément à la norme RFC 3161 s'appuyant sur le protocole standard TSP (Time Stamp Protocol). La résultante de cette étape est la production d'une enveloppe numérique XADES_T.

Cette même mise en oeuvre simple réalise la signature des données enregistrées en profitant du fait que, chaque caméra étant reliée au NVR par un tunnel sécurisé, l'ensemble forme une unité logiquement liée ou « bulle de sécurisée ». Dans ces conditions, une signature au niveau du NVR, associée à un identifiant unique pour chaque caméra (par exemple son adresse MAC) permet de garantir l'authenticité des données.

On a schématisé en figure 2 une « bulle sécurisée » 8 comportant essentiellement : un codeur vidéo numérique sécurisé ou une caméra IP sécurisée 9, un réseau VPN 10 de transmission de données RTP par paquets, et un NVR 11. Dans ce NVR 11, les paquets RTP successifs sont pris par groupes de paquets 12, et leur signature NVR 13 est déterminée pour chaque groupe de paquets. Cette signature NVR est traitée pour obtenir une signature 14 de type XADES. On obtient ensuite un certificat non réfutable (de façon classique selon le format X 509 reconnu internationalement) à l'aide de l'identifiant 15 de la caméra correspondante et de l'horodatage 16 de la prise de vue correspondante. La signature ainsi obtenue est alors stockée de façon sécurisée (17).

L'avantage de la solution de l'invention est que le système n'est pas contraint par la taille des paquets de la couche de transport RTP/SRTP et qu'on peut apposer une signature par tranches (les groupes 12 de la figure 2) de durée configurable, typiquement quelques dizaines de secondes pour chaque caméra, tout en restant compatible avec les formats normalisés de vidéo compatibles des dispositifs de visualisation retenus.

Le format de signature utilisé peut par exemple s'appuyer sur la norme « XAdES v1.1.1 » (Signature électronique sécurisée XML version 1.1.1) en utilisant une signature détachée. La signature est dite détachée lorsqu'elle concerne des ressources extérieures au document qui la contient (la ressource extérieure étant une empreinte du document ou condensat qui est le résultat d'un calcul sur le contenu du document à signer à partir d'un un algorithme qui ne nécessite pas de clés ou autre paramètre).

On notera que la norme XAdES v1.1.1 prolonge la spécification de la syntaxe et du traitement XML Signature de IETF/W3C (http://www.w3.org/TR/XAdES/) dans le domaine de la non-répudiation, en définissant des formats XML pour les signatures électroniques sécurisées conformes à la « Directive 1999/93/EC du Parlement européen et du Conseil du 13 décembre 1999 sur le cadre communautaire des signatures électroniques ». Elle fournit une authentification et une protection d'intégrité qui satisfait en particulier les obligations légales pour les signatures électroniques sécurisées de la Loi française 2000-230.

L'autorité cliente 5 est également typiquement un calculateur de type PC relié au NVR (fonctionnant en serveur) par un tunnel sécurisé 5A similaire aux autres tunnels 2A, 3A du système, au travers duquel sont transférées les données utiles. C'est cette autorité cliente qui met en oeuvre le processus d'administration de la preuve consistant en l'horodatage des signatures et en leur validation et assure l'archivage à valeur probante des données.

Pour compléter le dispositif, et en conformité avec les règles de procédure locales, il incombe généralement à un système de vidéosurveillance d'apporter la preuve de la fiabilité de la signature électronique en cas de litige. A cette fin, le système de base décrit plus haut est adossé à une plate-forme d'administration de la preuve, apportant la preuve de la fiabilité de la signature et assurant l'archivage en base de données de cette preuve. Ce principe qui fait partie de l'état de l'art est néanmoins rappelé ci-après en référence à la figure 3.

Sur cette figure 3, le processus d'administration de la preuve fournit la preuve de la fiabilité de la signature électronique sécurisée à partir d'un flux vidéo 18 au format RTP signé (par exemple en format XAdES) en effectuant les tâches suivantes :
- horodatage 19 : le flux signé 18 bénéficie alors d'une date certaine (datation certifiée) ;
- validation 20: l'intégrité des données et de la chaîne de certification est vérifiée.

Par ailleurs, le serveur de validation contresigne la validité de l'échange ;
- archivage 21 : les données, la signature, le jeton d'horodatage et la contre-signature par le serveur de preuve sont scellés et stockés. Cet ensemble constitue la preuve de la fiabilité de la signature électronique sécurisée (comme également indiqué en 17 sur la figure 2).

Selon la mise en oeuvre préférée de l'invention, le processus d'administration de la preuve ne se fait complètement que sur les données ayant un intérêt judiciaire (alarmes, extractions), les autres données étant destinées à être perdues au plus tard lorsque la durée de rétention légale aura été atteinte.

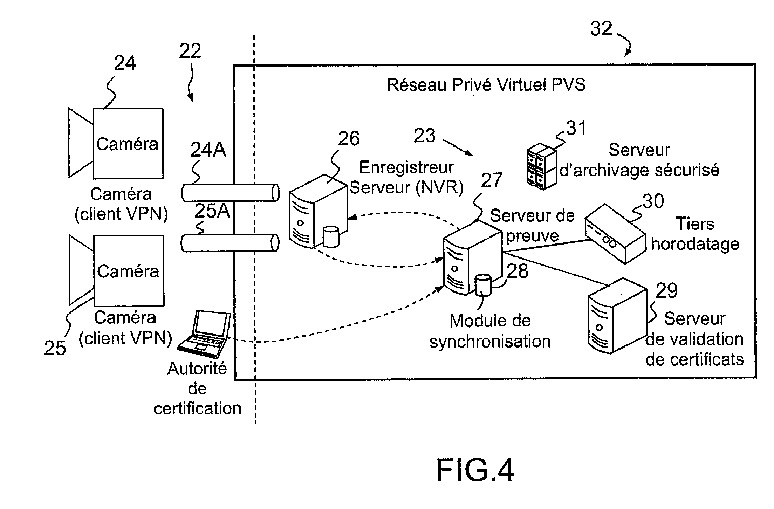

On a schématisé en figure 4 un système de mise en oeuvre de l'invention. Il comporte une « bulle de confiance » 22 similaire à celle de la figure 2 et un ensemble 23 de machines physiques.

La bulle 22 comporte essentiellement : des caméras numériques, par exemple au nombre de deux, à savoir les caméras 24 et 25, ces caméras étant reliées par des tunnels clients VPN, 24A et 25A respectivement, à un enregistreur-serveur NVR 26. Les éléments 26 à 31 constituent un réseau privé virtuel 32 qui devient alors une Plate-forme de Vidéosurveillance Sécurisée (PVS)

L'ensemble 23 de machines comporte :
- un serveur 27 dédié au « workflow » de preuve (il assure la gestion des tâches de preuve), auquel est adjoint un module de synchronisation 28 ;
- un serveur 29 dédié au module de validation de certificats;
- un serveur 30 dédié à l'horodatage ;
- et un serveur 31 dédié à l'archivage sécurisé.

Cette segmentation en serveurs dédiés à des tâches précisément définies correspond au découpage reconnu par les autorités de certification en matière de sécurité de l'information et permet de conserver la validité d'algorithmes déjà reconnus.

Le serveur 27 dédié au « workflow » de preuve a vocation à transmettre les flux vidéo signés depuis le NVR vers le serveur de preuve 27.

Dans le serveur de preuve 27, le module de synchronisation 28 est un composant logiciel « dormant » qui se déclenche périodiquement. Il balaye les données reçues par le NVR afin de récupérer les flux vidéo signés et marqués, pour les soumettre au mécanisme de création de la preuve mis en oeuvre par les serveurs 29 à 31.

Les flux vidéo incidents sont marqués (introduction d'un repère) lorsqu'ils sont extraits ou lorsqu'ils sont liés à un événement particulier (alarme). La périodicité du déclenchement de ce processus de marquage est configurable, typiquement de quelques secondes à une minute.

Le serveur d'horodatage 30 permet de fournir un « service d'estampillage » générique au « service de création de la preuve », service mis en oeuvre par l'ensemble des serveurs 27 à 31. L'estampillage donne une valeur juridique très importante à la signature électronique sécurisée puisqu'il répond en grande partie à la problématique de non-répudiation. Le serveur d'horodatage est appelé en premier lieu lors de la création de la preuve de la signature électronique du flux vidéo. Son programme d'horodatage a pour contrainte d'utiliser le protocole TSP (Time Stamp Protocol), pour se conformer à la norme RFC 3161 - TSP.

Le serveur de validation 29, appelé en second lieu lors de l'élaboration de la preuve de la signature électronique, permet de fournir les services suivants :
- La validation des chaînes de certification des certificats électroniques utilisés auprès des Autorités de Certification référencées au travers des Listes de Certificats Révoqués (LCR) [ ];
- La vérification des signatures électroniques (Intégrité de l'échange et des flux vidéo) ; et
- La Contre-signature PVS, consistant en une post-validation accréditant la validité de l'information reçue.

Le serveur de validation 29 s'appuie sur les Listes de Certificats Revoqués (LCR) des Autorité de Certification (AC) référencées et stockées dans la base de données du serveur de preuve 27. Le module 28, assurant la synchronisation des LCR, est chargé de la mise à jour des listes LCR des Autorités de Certification référencées.

Pour vérifier la validité des signatures des flux vidéo, le serveur de validation 29 récupère dans le fichier associé aux vidéos extraites les signatures au format XAdES_T. La contre-signature utilisée par le serveur de validation 29 s'effectue à partir d'un certificat numérique stocké dans la base de données du serveur de preuve 27.

Le serveur d'archivage 31, appelé en dernier lieu lors de l'élaboration de la preuve, permet de fournir les services suivants :
- Récupérer les données après les traitements d'harodatage et de validation ;
- Ajouter des données à titre historique ;
- Sceller l'archive à titre d'intégrité ;
- Stocker l'archive dans la base de données du serveur de preuve.

Comme les autres éléments 28 à 30, le serveur d'archivage 31 fait partie de la « bulle de confiance » 22. L'archivage est effectué sur la base de données de ce serveur. La fonction d'archivage est mise en oeuvre sur la même machine physique que la base de données afin de s'abstraire des connexions réseaux.

La contre-signature utilisée par le scellement de l'archive s'effectue à partir d'un certificat numérique stocké dans la base de donnée du serveur de preuve.

Selon une variante de l'invention, plus complexe, et lorsque l'application le nécessite, le NVR peut réaliser le chiffrement de son disque de façon que le disque qui serait extrait du NVR par des procédés frauduleux ne puisse être lu.

## Revendications

1. Procédé permettant de dématérialiser en toute sécurité le transfert de la preuve dans un système de production de flux de données de vidéo-surveillance, **caractérisé en ce que** ledit procédé comportant les étapes suivantes :
établir un réseau sécurisé de bout en bout et utiliser des mécanismes d'authentification au niveau de chaque acteur du réseau sécurisé et le cryptage des données transitant entre les acteurs,
effectuer la signature numérique des données enregistrées, quel qu'en soit le type,
- effectuer le chiffrement des données sensibles enregistrées,
- établir une infrastructure de gestion de clefs pour la création, le renouvellement, la distribution et la répudiation des clefs, et
- établir un processus d'administration de preuve en effectuant les étapes :
• de générérer l'horodatage de la signature numérique ;
• de valider cette signature numérique ;
• d'archiver *in fine* la preuve légale de l'intégrité et de l'authenticité du flux vidéo.

2. Procédé selon la revendication 1, **caractérisé en ce qu'**on augmente le niveau de sécurité du système en équipant chaque élément d'un mécanisme d'authentification forte, et qu'on met en place des techniques de limitation d'accès.

3. Procédé selon l'une des revendications précédentes, **caractérisé en ce qu'**il comporte les étapes suivantes :
- lors de la production des flux de données, on effectue des opérations de signature et d'authentification sur ces données, les dispositifs de production de flux de données étant protégés contre les intrusions,
- on effectue ensuite le cryptage symétrique et le hachage asymétrique des flux de données,
- on gère les clefs et les certificats en fonctionnement normal et en maintenance,
- on transmet les flux ainsi traités via un tunnel sécurisé à un serveur de type NVR qui enregistre les données reçues,
- on protège ledit serveur contre les intrusions et on effectue également pour ce serveur des opérations de signature et d'authentification de données, de cryptage, et on gère au niveau de ce serveur les clefs et les certificats en fonctionnement normal et en maintenance.

4. Procédé selon l'une des revendications précédentes, **caractérisé en ce que** le système de production de flux de données est un système de vidéosurveillance.

5. Procédé selon l'une des revendications 4 ou 5, **caractérisé en ce que** l'on effectue le contrôle des accès de chaque client au système en fonction des droits attribués à chaque connexion au tunnel sécurisé.

6. Procédé selon l'une des revendications précédentes, **caractérisé en ce que** la première partie du processus d'administration de la preuve consiste à horodater la signature conformément à la norme RFC 3161 s'appuyant sur le protocole standard TSP (Time Stamp Protocol).

7. Système permettant de dématérialiser en toute sécurité le transfert de la preuve dans un système de production de flux de données de vidéo-surveillance, comportant des sources de production de flux de données (2, 3, 5 ou 9 ou 24,25), un calculateur (4) incluant des fonctions d'enregistrement de données, de serveur de données et de serveur / relais de temps, et des moyens de communication entre les sources et le calculateur, les moyens de communication comportant un tunnel sécurise (2A, 3A, 5A ou 10 ou 24A. 25A) reliant chaque source au calculateur, que chaque source comporte des moyens de signature et d'authentification, ledit système comportant en outre un serveur de validation de certificats (29), un serveur d'horodatage (30) et un serveur d'archivage sécurisé (31), **caractérisé en ce que** ledit système est apte à mettre en oeuvre le procédé selon l'une quelconque des revendications précédentes.

## Patentansprüche

1. Verfahren, das die völlig sichere Dematerialisierung der Übertragung von Beweismaterial in einem Datenflussproduktionssystem einer Videoüberwachung zulässt, **dadurch gekennzeichnet, dass** das Verfahren die folgenden Schritte beinhaltet:
Aufbauen eines sicheren End-to-End-Netzwerks und Benutzen von Authentifikationsmechanismen bei jedem Aktor des sicheren Netzes und Verschlüsseln der zwischen den Aktoren fließenden Daten,
- Bewirken einer digitalen Signatur der gespeicherten Daten unabhängig vom Typ,
- Bewirken der Verschlüsselung der gespeicherten sensiblen Daten,
- Aufbauen einer Verwaltungsinfrastruktur von Schlüsseln für die Erzeugung, Erneuerung, Verteilung und Rückweisung von Schlüsseln, und
- Erstellen eines Beweisadministrationsprozesses unter Ausführung der folgenden Schritte:
• Erzeugen einer Zeitmarke der digitalen Signatur;
• Validieren dieser digitalen Signatur;
• *schließlich* Archivieren des rechtlichen Beweises für die Integrität und die Authentizität des Videoflusses.

2. Verfahren nach Anspruch 1, **dadurch gekennzeichnet, dass** das Sicherheitsniveau des Systems erhöht wird, indem jedes Element mit einem Mechanismus zur starken Authentifizierung ausgestattet wird und indem Zugangsbegrenzungstechniken angewendet werden.

3. Verfahren nach einem der vorherigen Ansprüche, **dadurch gekennzeichnet, dass** es die folgenden Schritte beinhaltet:
- Durchführen, bei der Produktion von Datenflüssen, von Signatur-und Authentifikationsoperationen an diesen Daten, wobei die Vorrichtungen zum Erzeugen von Datenflüssen vor Eingriffen geschützt werden,
- dann symmetrisches Verschlüsseln der Datenflüsse und Unterziehen der Datenflüsse einer asymmetrischen Hash-Funktion,
- Verwalten der Schlüssel und der Zertifikate bei normalem Betrieb und bei Wartung,
- Übertragen der so bearbeiteten Flüsse über einen sicheren Tunnel zu einem NVR-Server, der die empfangenen Daten speichert,
- Schützen des Servers vor Eingriffen und auch Durchführen, für diesen Server, von Datensignatur- und Authentifikationsoperationen, einer Verschlüsselung, und Verwalten der Schlüssel und Zertifikate bei normalem Betrieb und bei Wartung auf diesem Server.

4. Verfahren nach einem der vorherigen Ansprüche, **dadurch gekennzeichnet, dass** das Datenflussproduktionssystem ein Videoüberwachungssystem ist.

5. Verfahren nach Anspruch 4 oder 5, **dadurch gekennzeichnet, dass** die Kontrolle des Zugangs jedes Clients zu dem System in Abhängigkeit von bei jeder Verbindung mit dem gesicherten Tunnel zugeordneten Rechten erfolgt.

6. Verfahren nach einem der vorherigen Ansprüche, **dadurch gekennzeichnet, dass** der erste Teil des Verwaltungsprozesses des Beweismaterials im Zeitmarkieren der Signatur entsprechend der Norm RFC 3161 besteht, die sich auf den TSP-(Time Stamp Protocol)-Protokollstandard stützt.

7. System, das eine völlig sichere Dematerialisierung der Übertragung von Beweismaterial in einem Datenflussproduktionssystem einer Videoüberwachung zulässt, umfassend Datenflussproduktionsquellen (2, 3, 5 oder 9 oder 24, 25), einen Rechner (4) mit Datenspeicher-, Datenserver- und Zeit-Relais/Server-Funktionen, und Kommunikationsmittel zwischen den Quellen und dem Rechner, wobei die Kommunikationsmittel einen sicheren Tunnel (2A, 3A, 5A oder 10 oder 24A, 25A) umfassen, der jede Quelle mit dem Rechner verbindet, dass jede Quelle Signatur- und Authentifikationsmittel umfasst, wobei das System darüber hinaus einen Zertifikatvalidierungsserver (29), einen Zeitstempelserver (30) und einen sicheren Archivierungsserver (31) umfasst, **dadurch gekennzeichnet, dass** das System das Verfahren nach einem der vorherigen Ansprüche ausführen kann.

## Claims

1. Method allowing the secure dematerialisation of the transfer of the proof in a system for producing flows of video-surveillance data, **characterised in that** the method comprises the following steps:
- establishing a secure end-to-end network and using authentication mechanisms at the level of each participant in the secure network and encrypting the data moving between the participants,
- carrying out the digital signature of the data recorded, whatever the type,
- carrying out the encryption of the sensitive data recorded,
- establishing a key control infrastructure for the creation, renewal, distribution and repudiation of the keys, and
- establishing a proof administration process by carrying out the steps of:
• generating the time stamping of the digital signature;
• validating that digital signature;
• archiving in conclusion the legal proof of the integrity and authenticity of the video flow.

2. Method according to claim 1, **characterised in that** the security level of the system is increased by providing each element with a strong authentication mechanism and **in that** access limitation techniques are implemented.

3. Method according to either of the preceding claims, **characterised in that** it comprises the following steps:
- when the data flow is produced, signature and authentication operations are carried out on those data, the devices for producing data flows being protected against intrusions,
- subsequently, symmetrical encryption and asymmetrical hashing of the data flows are carried out,
- the keys and the certificates are controlled during normal operation and maintenance,
- the flows processed in this manner are transmitted via a secure tunnel to a server of the NVR type which records the data received,
- the server is protected against intrusions and data signature and authentication operations and encryption operations are also carried out for this server, and the keys and the certificates are controlled during normal operation and maintenance at this server.

4. Method according to any one of the preceding claims, **characterised in that** the system for producing data flows is a video-surveillance system.

5. Method according to either claim 4 or claim 5, **characterised in that** the control of access for each client to the system is carried out in accordance with the rights attributed at each connection to the secure tunnel.

6. Method according to any one of the preceding claims, **characterised in that** the first portion of the administration process for the proof involves time stamping the signature in accordance with the standard RFC 3161 which is based on the standard protocol TSP (Time Stamp Protocol).

7. System allowing the secure dematerialisation of the transfer of the proof in a system for producing flows of video-surveillance data, comprising sources for producing data flows (2, 3, 5 or 9 or 24, 25), a processor (4) including data recording, data server and server/time relay functions, and communication means between the sources and the processor, the communication means comprising a secure tunnel (2A, 3A, 5A or 10 or 24A, 25A) which connects each source to the processor, that each source comprises signature and authentication means, the system further comprising a certificate validation server (29), a time stamping server (30) and a secure archiving server (31), **characterised in that** the system is capable of carrying out the method according to any one of the preceding claims.
